# EUROPEAN PATENT SPECIFICATION

(11) **EP 1 945 896 B1**
(45) Date of publication and mention of the grant of the patent: **26.04.2017**
(21) Application number: 06791458.0
(22) Date of filing: 09.10.2006
(51) Int. Cl.: E06B 3/38

(54) **A WINDOW ELEMENT, A PROFILED PULTRUDED PANEL, A SYSTEM OF A PROFILED PULTRUDED PANEL AND ONE OR MORE FIXATION ELEMENTS, A COVERING OF A BUILDING OR A HOUSE, A BUILDING OR A HOUSE, A METHOD OF PROVIDING AN OUTER WEATHER RESISTANT COVERING, AND A BUILDING ELEMENT**
EIN FENSTERELEMENT, EIN PULTRUDIERTE PROFILIERTE PLATTE, EIN SYSTEM MIT EINER PROFILIERTEN PULTRUDIERTEN PLATTE UND EINEM ODER MEHREREN BEFESTIGUNGSELEMENTEN, EINE VERKLEIDUNG EINES GEBÄUDES ODER EINES HAUSES, UND EINE METHODE UM EINE AUSSENSEITIGE WETTERBESTÄNDIGE VERKLEIDUNG ZU BEKOMMEN.
UN ÉLÉMENT DE FENÊTRE, UN APNNEAU PROFILÉ PULTRUDÉ, UN SYSTÈME COMPRENANT UN PANNEAU PROFILÉ PULTRUDÉ ET UN OU PLUSIEURS ÉLÉMENTS DE FIXATION, UN RECOUVREMENT DE BÂTIMENT OU DE MAISON, ET UNE MÉTHODE POUR OBTENIR UN RECOUVREMENT EXTÉRIEUR RÉSISTANT AUX INTEMPÉRIES.

(30) Priority: 07.10.2005 EP 05388084; 11.05.2006 EP 06388034
(43) Date of publication of application: 23.07.2008
(73) Proprietor: FIBERLINE A/S, 6000 Kolding (DK)
(72) Inventor: THORNING, Henrik, DK-6000 Kolding (DK)
(74) Representative: Budde Schou A/S
(86) International application number: PCT/DK2006/000570
(87) International publication number: WO 2007/042038

(56) References cited:
- EP-A- 0 113 209
- EP-A- 1 362 966
- WO-A-2004/038306
- DE-B3- 10 304 536
- DE-U1- 20 205 796
- DE-U1- 20 304 344
- DE-U1-202004 020 156
- FR-A1- 2 390 557
- FR-A1- 2 591 322
- GB-A- 2 031 141
- US-A- 4 199 394
- US-A- 5 415 155
- US-A- 5 800 651
- US-A- 5 811 035
- US-A1- 2002 148 382
- US-A1- 2003 126 812
- US-B1- 6 941 700

## Description

The present invention generally relates to the technical field of houses and buildings and techniques of building houses and buildings and more particularly relates to novel window elements and panels to be used for wall covering and novel techniques for providing an outer weather resistant covering of a building.

Through the last century, numerous techniques have been developed within the technical filed of building houses and constructing buildings involving window elements and covering or facing elements such as high insulating windows including glazed windows, and furthermore certain techniques of constructing building elements or window elements have been developed by the applicant company such as the techniques described in applicant's published international patent application WO/2005/066444.

A window element to be used in a house or a building has to combine a number of different and sometimes conflicting requirements such as a maximum aperture for allowing light to be introduced into the building or house and at the same time provide a maximum insulation which in the major part of the industrialised world serve to reduce the transmission of heat from the interior of the building or house to the environment although in certain specific countries the insulating properties serve to reduce the transmission of heat from the environment into the building or house. The window element including a window frame further has to prevent the window frame from establishing a thermal bridge and also, as far as the window frame is concerned, has to prevent the window frame from being deteriorated or destroyed through the exposure to heat, rain and moisture under varying weather conditions. In addition, the window element of a modern building has to comply with aesthetic requirements and also functional requirements in terms of an attractive appearance allowing the window element to be easily incorporated into and allowing the architect to design the building without being limited by the design and the structure of the window element, and at the same time, from a functional point of view, should be easy to operate provided the window is openable and easy to maintain in terms of cleaning and service in case e.g. a broken window pane need to be substituted by a novel window pane.

The profiled pultruded panel disclosed in patent application US 5 811 035 A discloses all the features of the preamble of claim 1.

J An object of the present invention is to provide a window element composed of a minimum number of components and allowing the window pane itself to serve as an openable window without any casements circumferentially enclosing the window pane.

A feature of the present invention is to provide a window element made from a minimum number of components which may be integrated into the facade of a building or house allowing the window elements to cover the facade of the building and at the same time allows a specific window to be constructed as an openable window or alternatively a permanently closed window without influencing to any substantial extent the appearance of the window element in question.

A particular advantage of the present invention relates to the fact that the window element according to the present invention produced from a minimum number of components may be easily converted by the simple substitution of a few components integrated into the window element from an openable window into a permanently closed window and vice versa, and in the conversion from an openable window to a permanently closed window or vice versa allows the building or house to be configurated or modified in accordance with specific and altering use or requirements.

The above object, the above feature, the above advantage together with numerous other features and advantages which will be evident from the below detailed description of a presently preferred embodiment of a window element are according to the present invention obtained by a profiled pultruded panel to be used as a wall covering, preferably an outer wall covering, of a building or a house, the panel comprising:
an elongated, planar plate defining opposite first and second sides and a top and a bottom edge,
a set of profiled top and bottom flanges extending perpendicularly from the plate at the first side thereof along the top and bottom edges, respectively, the profiled top flange defining a top surface and the profile bottom flange defining a bottom surface complementary to the top surface of the top flange,
at least one further flange extending from the plate at the first side thereof from a position between the top and bottom flanges and defining an acute angle, preferably an angle of 45°, relative to the plate and sloping downwardly towards the bottom edge, and
the planar elongated plate, the set of profiled top and bottom flanges and the at least one further flange being integrally produced in a pultrusion process.

The profiled pultruded panel according to the present invention constitutes a weather resistant facing panel which may easily be mounted and joined to similar panels by interconnecting the top and bottom flanges of the profiled pultruded panels which are positioned on top of one another.

In addition, the profiled pultruded panel according to the present invention is positioned and fixated relative to a supporting surface such as a supporting building structure made from e.g. concrete, steel, wood or any other building material as the further flange defining an acute angle relative to the first side of the elongated planar plate is caused to grip behind a fixation device which has previously been fixated to the supporting building structure.

As distinct from conventional profiled pultruded panels or panels which are conventionally made from a planar plate having a plurality of perpendicularly pending webs, the further flange characteristic of the profiled pultruded panel according to the present invention extends in an acute angle, preferably in an angle of approximately 45° relative to the first side of the plate or to the inner side of the plate providing a flange which itself catches behind the fixation device and provides a self-locking of the panel relative to the supporting building structure due to the sloping configuration of the further flange.

In order to improve the fixation of the profiled pultruded panel according to the present invention to the supporting building structure, additional sloping flanges may advantageously be provided for providing several fixation and arresting flanges co- operating with corresponding fixation devices fixated to the supporting structure.

In order to improve the fixation of the profiled pultruded panel according to the present invention, the further flanges preferably have at their outer ends a downwardly protruding lip and have at their lower surfaces facing towards the bottom flange an inner recess complementary to the downwardly protruding lip.
The provision of the sloping flanges exhibiting the downwardly protruding lip and the inner recess which is complementary to the downwardly protruding lip allows the profiled pultruded panel to be used in combination with a fixation device which is simply produced by cutting off a part such as a web having a width of e.g. 5-20 cm of the profiled pultruded panel itself and turning upside down the web for providing the fixation device to be mounted and fixated to the supporting building structure. As the fixation device is produced by a part of the profiled pultruded panel itself, the registration of the fixation devices provided a plurality of panels are positioned above one another is easily obtained by simply positioning the individual fixation devices on top of another by using the complementary configurated surfaces of the top and bottom flanges for properly positioning the fixation devices. In this context it is to be understood that the top flange of the profiled pultruded panel and the bottom flange of the profiled pultruded panel constitute in the inverted positioning of the fixation device cut from the profiled pultruded panel a bottom flange and a top flange, respectively.

The profiled pultruded panel according to the present invention further allows the panel to be configurated to integrally include fixtures for e.g. fixating electrical cables or wires, heating or water tubes and/or insulating panels or alternatively, a specifically configurated web into the profiled pultruded panel as the web may be integrated into the profiled pultruded panel in the pultrusion process itself.
The pultrusion process ifself also allows the integration of differently configurated elements or components such as e.g. reservoirs extending longitudinally along the profiled pultruded panel which reservoirs may serve for dispensing e.g. a constituent for preventing the growth of micro organisms at the first side of the plate.
Although the configuration of the fixation flange or flanges provided by the downwardly sloping flanges of the profiled pultruded panel characteristic of the present invention prevents water from being accumulated within the inner space defined between the first side of the elongated planar plate and the supporting building structure, humidity may condense at the inner surface of the planar plate of the profiled pultruded panel and for preventing any micro organism such as algae to develop and cause a colouring of the profiled pultruded panel which may be at least partly translucent, reservoirs for the dispensing of micro organisms at the inner surface may be provided. According to a variant of the profiled pultruded panel having an integral micro organism growth preventing component, a copper conductor is simply integrated into the inner surface of the planar plate of the profiled pultruded panel which copper conductor dispenses copper irons which are contemplated to be capable of preventing any growth of micro organisms at the inner surface of the profiled pultruded panel constituted by the first side of the elongated planar plate.
The profiled pultruded panel itself may as stated above be translucent or be pigmented in order to provide a coloured profiled pultruded element. Alternatively, the panel may simply be painted and in this context e.g. a UV resistant paint or coating may advantageously be used. In addition, e.g. fire retarding coatings or paints may be used.
The present invention further relates to a system of a profiled pultruded panel according to the present invention and one or more fixation elements which one or more fixation elements are preferably and advantageously constituted by segments of the profiled pultruded panel being turned upside-down as discussed above.
The present invention further relates to a covering of a building or house which covering is constituted by a plurality of profiled pultruded panels according to the present invention and fixated in the system according to the present invention.

The present invention further relates to a building or a house having an outer covering constituted by a plurality of profiled pultruded panels, preferably implemented in accordance with the present invention and preferably fixated in the system according to the present invention. Furthermore, the present invention relates to a method of providing an outer weather resistant covering of a building or a house by use of the profiled pultruded panels according to the present invention.

The invention is now to be further described with reference to the drawings in which
Fig. 1 is an overall and schematic view of a facade implemented in accordance with the teachings of the present invention by the use of a number of profiled pultruded panels according to the present invention and also including two window elements ,
Fig. 2 is a perspective view of the window element ,
Fig. 3 is a top sectional view of the window element also shown in Fig. 2,
Fig. 4 is a vertical sectional view of the window element also shown in Figs. 2 and 3,
Fig. 5a is a vertical sectional view of a detail of the top hinge of the window element also shown in Figs. 2-4,
Fig. 5b is a view similar to the view of Fig. 5a illustrating a detail of a variant of the top hinge of the window element also shown in Figs. 2-4.
Figs. 6 and 7 are views illustrating details of a closure of the window element shown in Figs. 2-5,
Fig. 8a is a vertical sectional view illustrating a detail of a bottom part of the window element shown in Figs. 2-7,
Fig. 8b is a view similar to the view of Fig. 8b illustrating a detail of a variant of the bottom part of the window element shown in Figs. 2-4, 6 and 7.
Fig. 9 is a top, perspective and schematic view of a presently preferred embodiment of a profiled pultruded panel according to the present invention to be used as a building covering panel,
Fig. 10 is a bottom perspective and schematic view of the profiled pultruded panel also shown in Fig. 9,
Fig. 11 a is a vertical sectional view of the profiled pultruded panel shown in Figs. 9 and 10,
Fig. 11b is a vertical sectional view similar to the view of Fig. 11 a of an alternative configuration of the profiled pultruded panel,
Fig. 12 is a vertical sectional view of a variant of the profiled pultruded panel according to the present invention,
Fig. 13a is a vertical sectional view illustrating the technique of using a segment of the profiled pultruded panel shown in Figs. 9-11 as a fixation device for fixating the profiled pultruded panel shown in Figs. 9-11 to an outer wall of a building or a house,
Fig. 13b is a view similar to the view of Fig. 13a illustrating the technique of using the profiled pultruded panel shown in Fig. 11 b.
Fig. 14 is a perspective and schematic view of a plate element to be used for interconnecting two profiled pultruded panels to be adjoined edgewise to one another,
Fig. 15 is a perspective and schematic view similar to the view of Fig. 14 of a joining element to be used for joining two profiled pultruded panels along a corner of a building structure,
Fig. 16a is a perspective, partly sectional and exploded view of a building element to be used as a roof or ceiling element,
Fig. 16b is a vertical sectional view of variants of the building element shown in Fig. 16a,
Fig. 16c is a sectional and perspective view of a variant of the building element shown in Fig. 16a,
Fig. 16d is a perspective and exploded view of the building element according to the present invention,
Figs. 17a is a sectional, perspective top view of a further embodiment of the building element according to the present invention,
Fig. 17b is a detail of the building element shown in Fig. 17a,
Fig. 18 is a perspective, partly broken away view illustrating the technique of assembling two building elements according to the present invention in a juxtaposed assembling process,
Figs. 19a and 19b are vertical sectional views illustrating two building element s prior to and after joining the building elements,
Fig. 20 is an elevational, perspective and partly cutaway view of a further embodiment of a building element according to the present invention to be used as a ceiling or roof element,
Figs. 21 a and 21 b are elevational, perspective and partly cutaway views similar to the view of Fig. 20 of alternative variants of the building elements according to the present invention constituting wall elements to be used for the application of heat by means of a heated liquid such as heated water or heated, respectively, and
Fig. 22a and 22b are perspective, and partly sectional, views of components to be joined together for the assembling of the building element according to the present invention.

Throughout the drawings, the same reference numerals indicate identical elements or components, In the present specification, components or elements identical to components or elements, respectively, described previously with reference to a preceding figure are designated the same reference numerals and components or elements differing from previously described components or elements, respectively, however serving the same overall purpose, are designated the same integer as the previously described component or element.

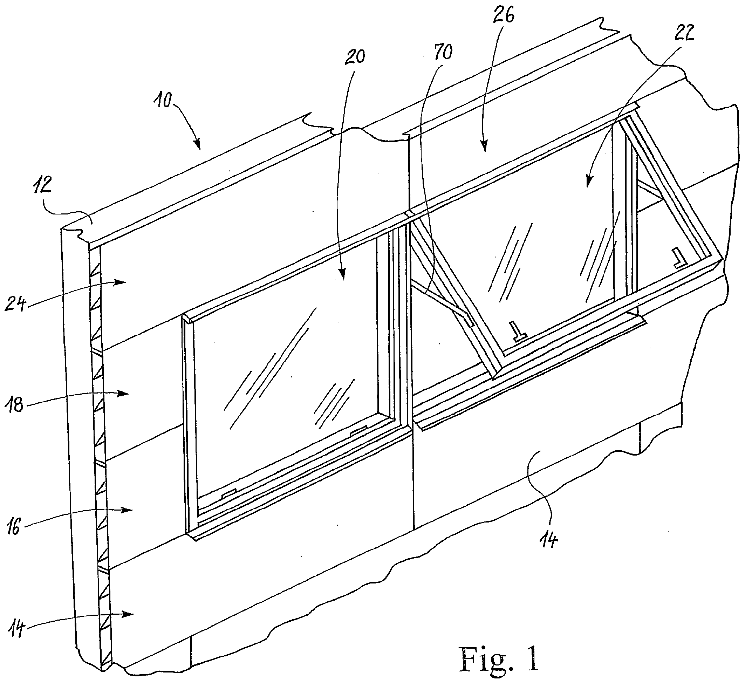

In Fig. 1, an outer wall of a house or a building is shown which outer wall is designated the reference numeral 10 in its entirety. The wall is supported by a supporting structure 12 which may be made from concrete, steel, wood, pultruded elements or combinations of the above materials and which delimits the configuration of the outer wall and also includes e.g. insulating material and optional heating pipes, electrical installations including electrical power, computer wiring, etc. The supporting structure 12 may be made as a single layer or double or multi layer structure in which the individual layers are insulated relative to one another by means of an interlayer insulating material layer. On the outer surface of the supporting structure 12, a plurality of profiled pultruded panels are mounted and fixated in accordance with a technique which will be described in greater details below.

In Fig. 1, a total of six profiled pultruded panels are shown, two of which are designated the reference numeral 14 and constituting a bottom set of panels on top of which two panels 16 and 18 are positioned adjacent to two windows 20 and 22. Above the panel 18, a further profiled pultruded panel 24 is mounted bridging across the window 20 and on top of the window 22, a further profiled pultruded panel 26 is positioned and fixated.

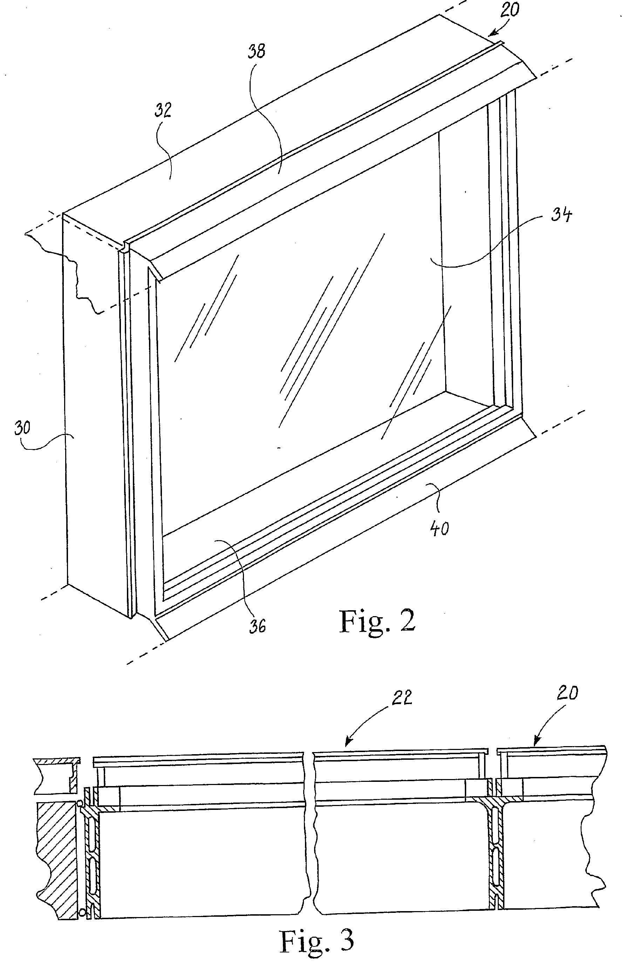

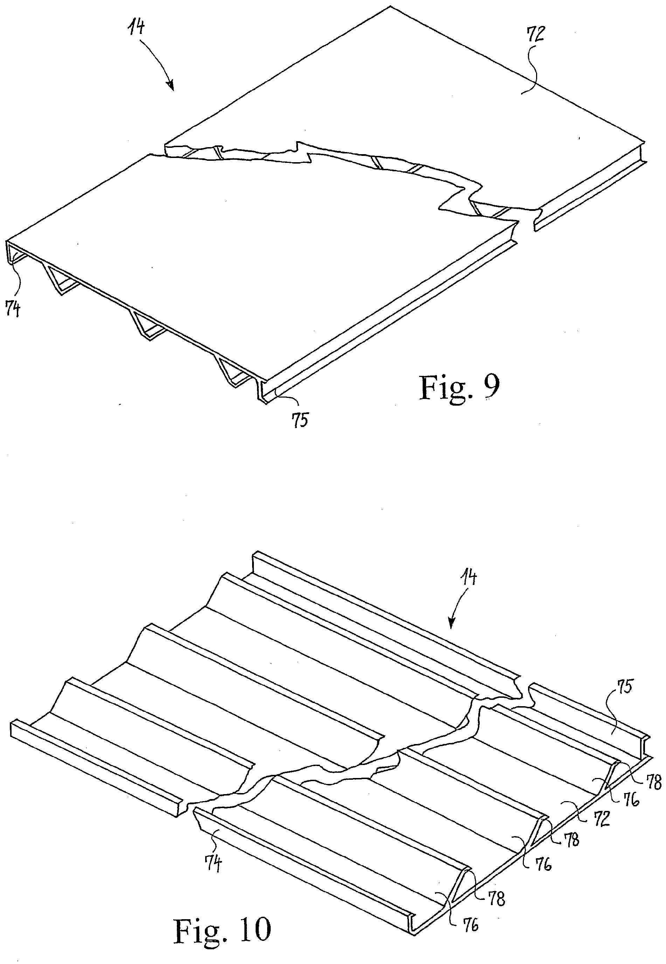

The profiled pultruded panels are shown in greater details in Figs. 9, 10, 11a, 11b, 12, 13a, and 13b and the window elements are shown in greater details in Figs. 2, 3, 4, 5a, 5b, 6, 7, 8a and 8b to be discussed in greater details below.

The window elements 20 and 22 are constructed from identical elements, however, differing from one another in that the window element 20 is a permanently closed or sealed-off window, and the window element 22 is a openable window element as illustrated in Fig. 1. According to the teachings of the present invention, the window elements 20 and 22 will readily be modified as the permanently sealed window element 20 may readily be modified into an openable window, and similarly, the window element 22 may readily be converted into a permanently closed window element.

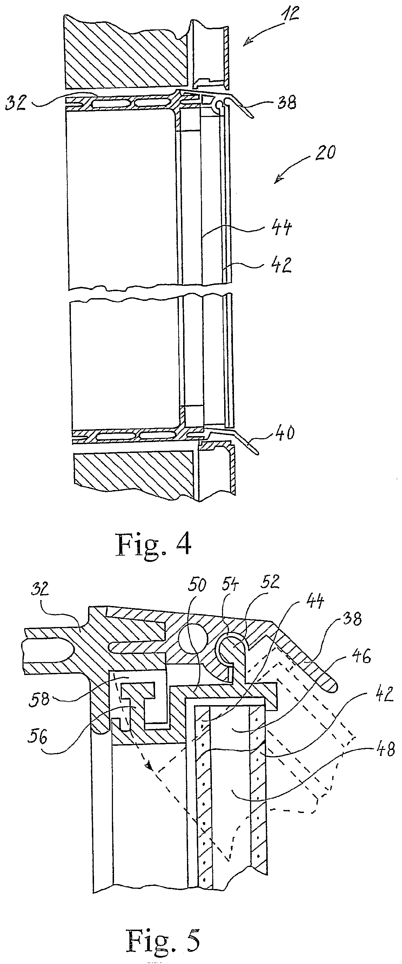

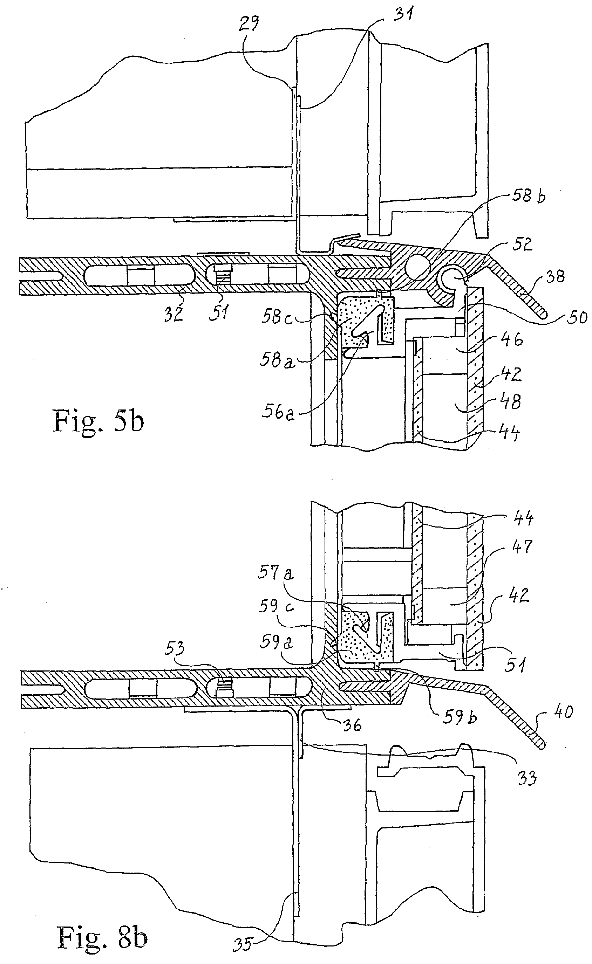

In Fig. 2, the window element 20 is shown in greater details. The window element 20 comprises a stationary cincumferential rim composed of two side posts 30 and 34, a top post 32 and a bottom post 36. From the top post 32, an outwardly protruding element 38 extends providing a top drip cap. Similarly, a bottom drip cap 40 is provided at the bottom post 36. The window element 20 is, as is evident from Fig. 4 and 5, composed of two glass panels 42 and 44 which are kept in space apart relationship by means of a set of circumferential distance elements 46 which seal off an inner space 48 defined between the two glass panels providing a glazed window structure.

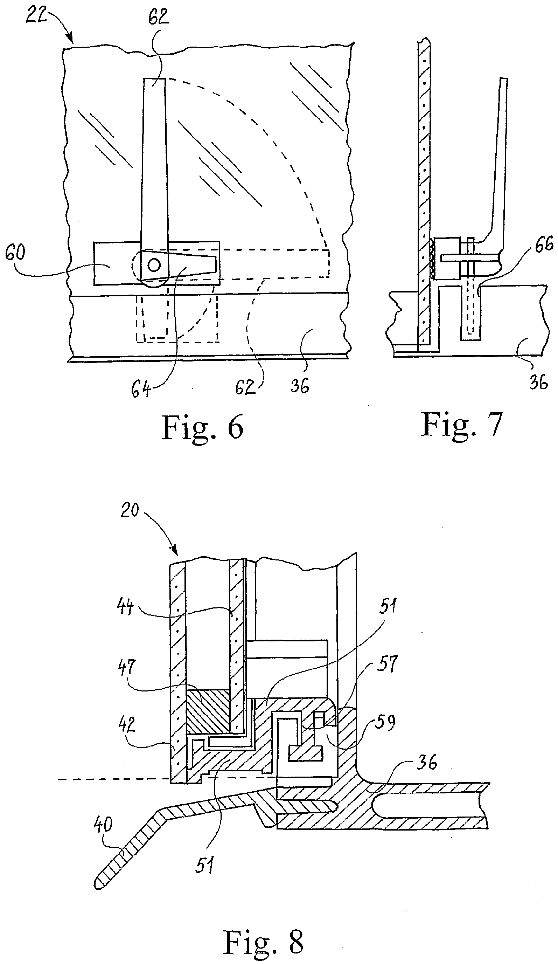

The glazed window structure is at its upper edge adhered to a top hinge part 50 constituted by a pultruded element providing a circular cylindrical body part 52 which is received within a circular groove of the top drip cap 38. The top drip cap 38 constitutes an extension of a profiled pultruded element which is fixated in a wedged joint to the top post 32 of the frame of the window element. The profiled pultruded element 50 constituting the movable hinged part of the window element adhered to the glazed window structure is, as is evident from Fig. 5a, provided with an integral T-shaped flange 56 on which an insulating sealing body 58 is mounted. The insulating body 58 may be made from a high insulating rubber or elastomer material such as natural rubber or foamed plastics material. Similar to the insulating body 58, insulating bodies are provided extending along the sides of the glazed window and also along the bottom edge of the window element as is illustrated in greater details in Fig. 8a.

In Fig. 8a, the lower drip cap 40 is shown which is fixated to the bottom post 36 in a wedged joint similar to the joint between the top drip cap 38 and the top post 32.

In Fig. 8a, a pultruded element 47 is shown serving the same purpose as the above described distance element 46 shown in Fig. 5a. The bottom part of the window element 20 further discloses a bottom profiled pultruded element 51 similar to the above described element 50 and fixated to the bottom part of the glazed window structure in which the outer glass panel 42 extends beyond the distance element 47 as distinct from the top part shown in Fig. 5a in which the upper edges of the outer glass panel 42 and the inner glass panel 44 are positioned at identical heights. From the profiled pultruded element 51 joined and adhered to the glazed window structure including the glass panels 42 and 44, a downwardly protruding flange 57 similar to the above described flange 56 serves to fixate an insulating and sealing body 59 similar to the above described insulating and sealing body 58.

In Figs. 5b and 8b, a variant of the window element 22 differing from the above described embodiment shown in Figs. 5a and 8a in that the integral T-shaped flanges 56 and 57 are substituted by a differently configurated T-shaped flange 56a and 57a, respectively, having a sloping top of the T-shaped profile. In addition, the insulating body or sealing gaskets 58 and 59 shown in Figs. 5a and 8a, respectively, are substituted by a differently configurated sealing gasket 58a and 59a shown in Figs. 5b and 8b, respectively, basically cnfigures so as to allow the sealing gasket ot be mounted on the co-operating sloping profiled T-shaped flanges 56a and 57a and at the same time provide through-going sealing beads 58b, 58c and 59b, 59c sealing against the horizontal and the vertical surfaces of the window frame for providing a sealing off effect relative to overpressure and underpressure prevailing exterior relative to the inner space defined behind the window, which over- and underpressures are generated most often by wind pressure and wind suction, respectively.

In Figs. 5b and 8b, an additional set of profiled metal elements 29, 31 and 33, 35, respectively, are shown for fixating the profiled pultruded elements of the window structure. In addition, Figs. 5b and 8b illustrate a threaded bar 51 and 53, respectively, serving to co-operate with threaded T-knots for joining the top and bottom profiled elements of the window structure together and maintaining the window structure in the intentional configuration.

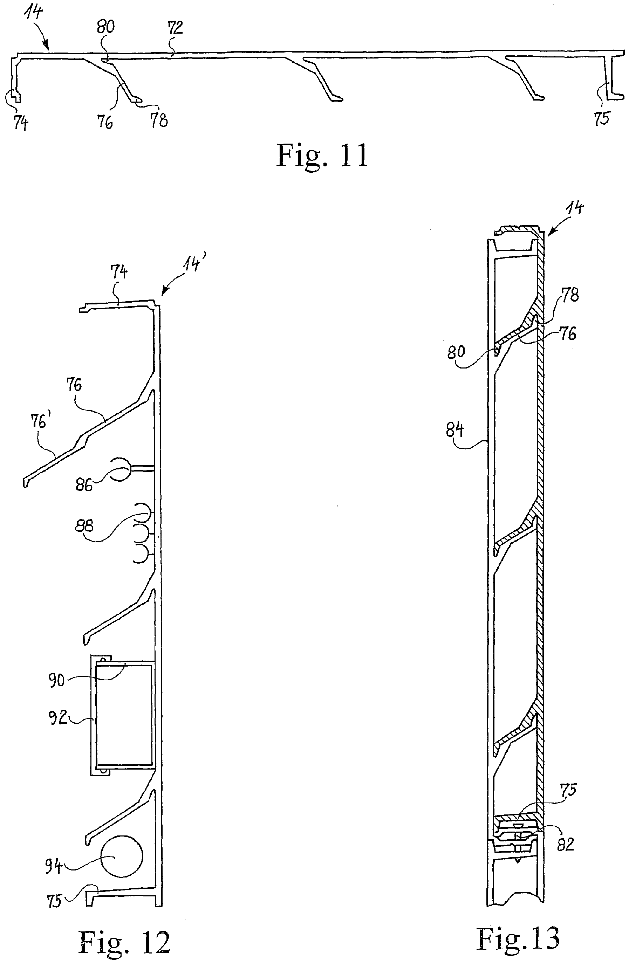

In Figs. 6 and 7, a detail of the closure elements of the window element 22 is shown. The closure element is constituted by a supporting body 60 which is adhered to the inner side of the glass panel 44 and further a handle 62 which is joined to a lath 64 which is shown in Fig. 6 in its raised position in which the window 22 may be opened as is illustrated in Fig. 1 as the lath 64 is raised freely above the bottom edge part of the bottom web 36. By turning the handle 62 clockwise to a position shown in the dotted line in Fig. 6, the lath 64 is caused to move into a recess 66 of the bottom post 36 for causing the window element to be closed and sealed. The handle operated locking and sealing lath 64 may be omitted in which case the lath 64 is permanently arrested in the recess 66 permanently closing and sealing off the window element. In this context, the use of a minimum of components and identical pultruded elements in both window elements 20 and 22 shown in Fig. 1 constituting a permanently closed and an openable window, respectively, allows even permanently closed or fixed windows to be made from the same components and include inherently the hinged parts of the openable window 22 without increasing the overall price of the window element by the presence of the unused hinged part. Apart from the hinged parts described above with reference to Fig. 5a, additional arresting elements such as an arresting arm 70 shown in Fig. 1 may be provided allowing a continuous opening of the window, or alternatively allowing a stepwise opening of the window, and furthermore, conventionally known multi-positioning window elements may be provided for allowing the window element to be opened in different orientations and tilted.
In Figs. 9 and 10, one of the profiled pultruded panels shown in Fig. 1 is illustrated in greater details. In Fig. 9, the profiled pultruded panel 14 is illustrated as viewed from the outside, and in Fig. 10, the profiled pultruded panel is illustrated as shown from the inner side facing the supporting building such as the supporting building 12 shown in fig. 1. The panel 14 comprises a substantially planar plate 72 which may be non-transparent or at least partly translucent provided no substantial content of pigments be included in the polymer material from which the profiled pultruded panel is made.
At an upper edge of the plate 72, a top flange 74 extends perpendicularly from the inner side of the plate. Opposite to the top flange 74, i.e. at the bottom edge of the plate 72, a bottom flange 75 extends which has an outer configuration which is complementary to the configuration of the top flange 74 allowing the bottom flange 75 to fit with and lock into the top flange of another panel similar to the panel 14 shown in Fig. 9. From the inner side of the plate 72, a total of three additional flanges extend which are designated the reference numeral 76. The three flanges 76 are mutually parallel and extend at an angle of approximately 45° sloping towards the bottom flange 75 and has an outwardly protruding lip 78 which is shown in greater details in Fig. 11a.

Each of the sloping edges 76 is further at its innermost lower side provided with a recess 80 which is configurated so as to allow the recess to receive the outwardly protruding lip 78 of the profiled pultruded panel as is illustrated in Fig. 13a. According to the advantageous and preferred embodiment of the profiled pultruded panel 14 shown in Figs. 9, 10 and 11a, each of the sloping flanges 76 are configurated so as to allow the lower surfaces of each of the flanges to co-operate and receive an inversely orientated flange of an identical same profiled pultruded element. This feature of allowing the identical element to be received provides an extremely simple fixation technique as the profiled pultruded panels shown in Fig. 1 are easily mounted in their intentional position by cutting off along an edge of the panels a segment such as a segment having a width of 10-20 cm, turning the segment upside-down and fixating the element to the supporting building by e.g. screws or nails or by means of an adhesive or a combination thereof and positioning additional segments on top of the previously mounted segment so as to provide a row of supporting segment serving as fixation devices for the panels to be fixated to the supporting wall.

In Fig. 13a, the fixation technique is illustrated as the right side cross-hatched profiled element 14 constitutes the panel whereas the unhatched left-hand side elements constitute the fixation segments to which the cross-hatched panel 14 is fixated. In addition to the arresting of the outwardly protruding lip 78 within the recess 80, the panels may be further fixated by means of a fixation screw 82. In Fig. 13a, the fixation device is constituted by a segment of the profiled pultruded panel d designated the reference numeral 84.

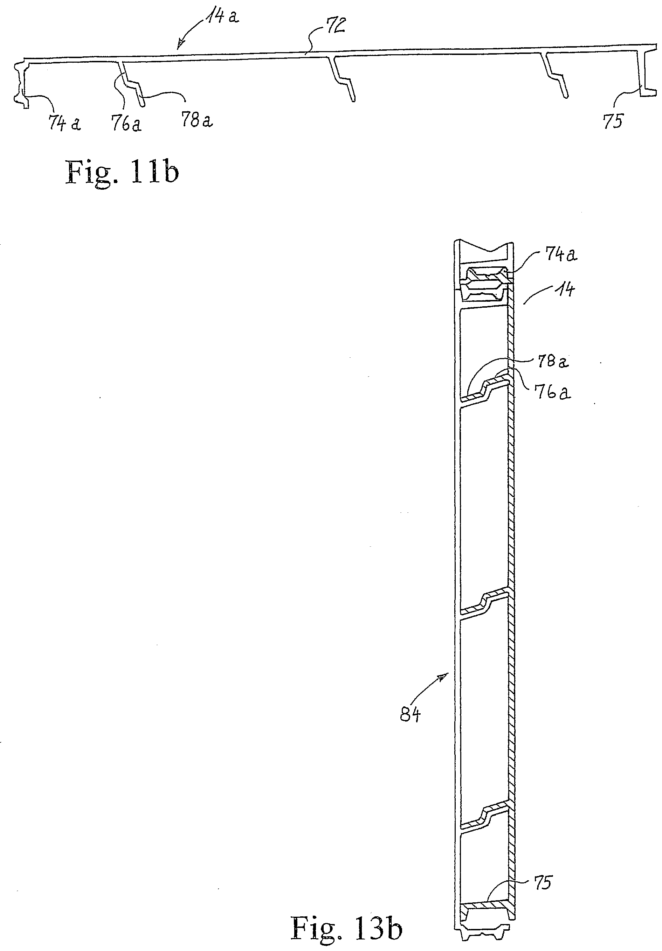

In Fig. 11d, an alternative and presently preferred embodiment of the profiled pultruded panel according to the present invention is shown designated the reference numeral 14a, differing from the above-described first embodiment shown in Fig. 11 a in that the free sloping flanges similar to 76 shown in Fig. 11 a are composed of two cranked parts 76 and 78 allowing the panel to be easily joined with the profiled element serving to fixate the panel as is shown in Fig. 13b, including the same signature as used in Fig. 13a. In addition, the embodiment 14 a of the profiled pultruded panel differs from the above-described first embodiment in that the top flange is provided with elongated upwardly pultruding beads as is illustrated in fig. 11b for providing an improved arresting of the adjoined panel as is illustrated in fig. 13d as compared to the joining of the panel 14 with the lower panel as is shown in Fig. 13a.

The technique of providing the outer surface covering of a building as panels produced in an integral pultrusion process also allows the pultruded elements to be configurated so as to receive cables by integrally providing cable holding elements which are included in a variant of the profiled pultruded panel which variant is shown in Fig. 12 and designated the reference numeral 14'. In addition to the top and bottom flanges 74 and 75, respectively, and the downwardly sloping fixation flanges 76, a major cable holder 86 is provided together with a plurality of three minor cable or tubing fixation elements 88.

In Fig. 12, a further duct 90 having a cover 92 is shown in which duct e.g. low voltage cables such as telephone or computer cables may be mounted. In Fig. 12, the reference numeral 94 designates a water tube which may be housed within the inner space defined behind the profiled pultruded panel 14.

According to a further alternative or variant of the profiled pultruded panel 14, the sloping flanges 76 are elongated by adding a further extension of each of the flanges allowing the profiled pultruded panel to be positioned with a larger spacing to a supporting building as the extension of each of the flanges 76 may be cut off the supporting fixation element such as the element 84 shown in Fig. 13.

In Fig. 12, one extension of one of the flanges 76 is shown in phantom line and designated the reference numeral 76'.

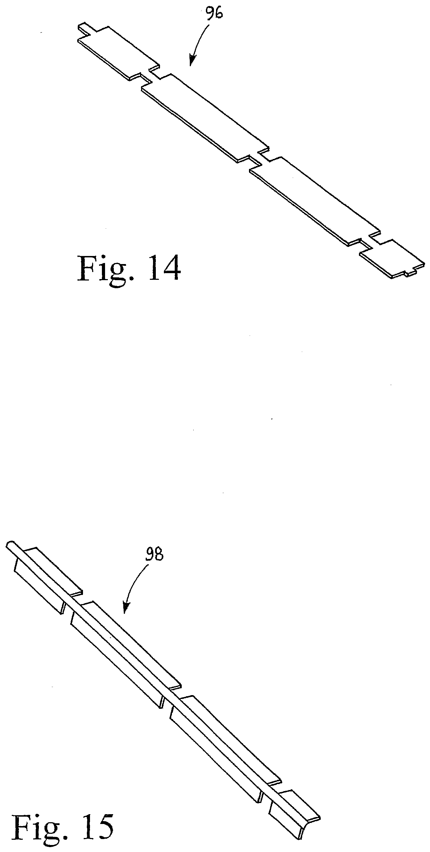

For joining two adjacent panels together such as the panels 24, 26 shown in Fig. 1, a sealing and joining element is preferably used, which element is shown in Fig. 14 and designated the reference numeral 96. The element is simply introduced edgewise into one of the panels 24 or 26 and fixated in the recesses 80. Then the next panel is pushed into and joined with the element 96.
At the corners of the building, a similar bent-joining element may be used which element 98 is shown in Fig. 15.
The technique of assembling panels together by means of the elements 96 and 98 shown in Figs. 14 and 15, respectively, will be modified by simply using a through-going connecting plate and cutting by means of a rotational cutter a groove edgewise into the adjacent panels to be joined together by means of the plate.

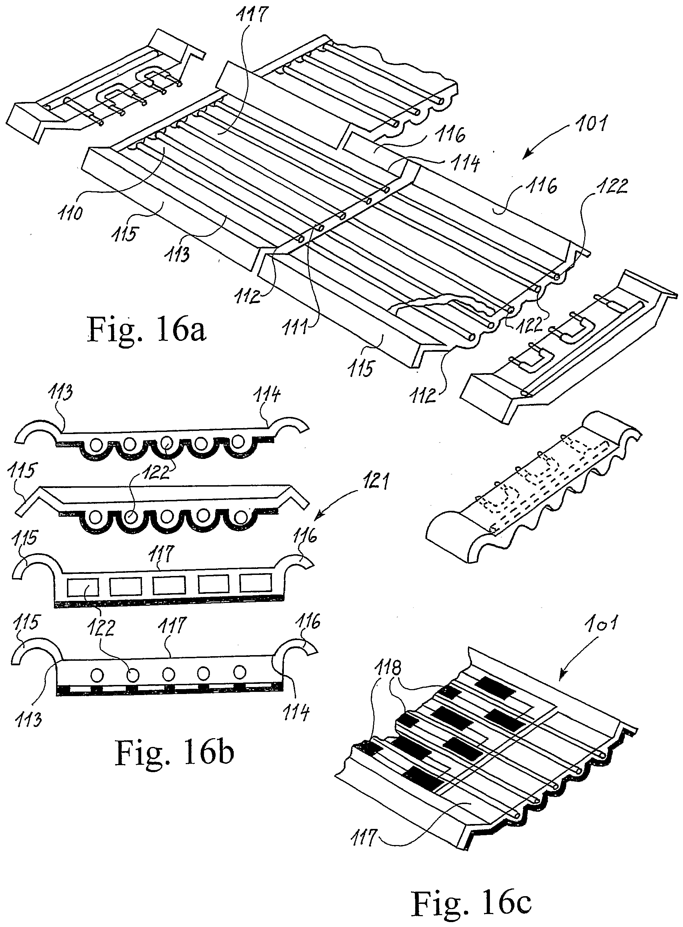

In Fig. 16a, a first embodiment of a building element is shown designated the reference numeral 101 in its entirety. The building element may constitute a profiled panel 110 defining a major surface 117 of an overall rectangular configuration. The rectangular configuration defines two sets of parallel opposite and second ends 113 and 114 and another set of parallel opposite third and fourth ends 111 and 112.
Additionally, the building 101 element is constituted by a profiled channel housing integral with the profiled panel 110.
The building element has at its first and second ends 113 and 114 a respective profiled first and second connector 115 and 116. Each of the connectors 115 and 116 extends between the parallel ends 111 and 112 and along the respective parallel ends 113 and 114.
The first connector 115 is configured so as to provide an overlapping, resting and catching joining with another co-operating second connector 116 of a corresponding shape of a second identical and adjacent building element, whereby the profiled panel and the second building element constitute one single big panel surface.

The second connector 116 is configured so as to provide a resting and catching joining with another co-operating overlapping first connector 115 of a corresponding shape of a third adjacent and identical building element, whereby the profiled panel and the third building element constitute one single big surface. As a result of the joining of the connectors 115 and 116 at both ends of the elements, three elements are connected together. Accordingly any desired shape and size of the resulting assembled, connected or joined elements as one single profiled panel may be provided.

The building element 101 may be comprised by a number of through-going channels 122. Each of the channels extends between the ends 111 and 112, or alternatively between the ends 113 and 114, not shown in Fig. 16a.

Fig. 16b shows four different variants of the building element for application as a roof or ceiling element. In particular the figure shows the profiled panel from the end 112. As is evident from Fig. 16b, the first variant is provided with holes of a circular configuration. In the second variant the holes are lined, e.g. with insulating materials or tightening materials, such as an inner coating. In the third variant the holes are of a rectangular configuration. In the fourth variant, the holes are located as a channel or tubular connection in a panel having either a flat bottom surface or a curved bottom surface.

Alternatively, each of the holes 122 may be configured as a square, an elliptical, a triangular or polygonal shape.

The holes may be fluid tight, i.e. watertight and also tight for oil or for other liquids as well. Accordingly, the holes may be applied for transporting any fluids.

The fluid may be a heated fluid, e.g. hot air, hot water or sun panel fluids. Accordingly, the building element may be used as a heating panel. Alternatively, or additionally, additional holes may be used for a different purpose, e.g. for transporting a cooled or a cooling fluid, such as cold air or cold water. Accordingly, the building element may also be applied in air conditioning system and/or to cool down a building or building part.

In the four variants of the profiled building element shown in Fig. 16b, the number of holes 122 are preferably 5. Alternatively, the number of holes may be 3, 4, 6, 7, 8, 9, etc. Preferably, the channels or holes, which are located in the profiled channel housing and/or in the building element, may be mutually equidistantly spaced from the end 113 and the end 114. In another embodiment the holes or channels may alternatively be mutually equidistantly spaced between the end 111 and the end 112. Consequently, any two identical building elements fit together since the holes or channels of the one building element face the holes or channels of the other building element of the equally numbered channels or holes of the two building elements.

Fig. 16c shows an embodiment 101 of the building element, which may be applied to provide energy from the sun. Accordingly, the building element having basically the properties from embodiments shown in Fig. 16a and 16b is provided with one or more solar cells 118 on top of the major surface 117. The channels or holes 122 may be applied to cool down the solar cells 118 to extend their life time by providing a constantly cool or cooled fluid through the holes or channels, alternatively the channels 122 may be applied to provide even more energy from the sun from a sun heated fluid running through the channels or holes.

Possibly the first connector 115 is of a bigger size than the size of the second connector 116. However, provided the thickness of the connectors 115 and 116 is very small, the connectors 115 and 116 may be of the same shape and size.

The two profiled connectors 115 and 116 may be integrally pultruded with the profiled panel in a single process.

The rectangular major surface 117 may be of a transparent material, or of a translucent material in any of the above described embodiments. Alternatively, or additionally in any of the above described embodiments, the major surface 117 may be provided with a layer of transparent polyester.

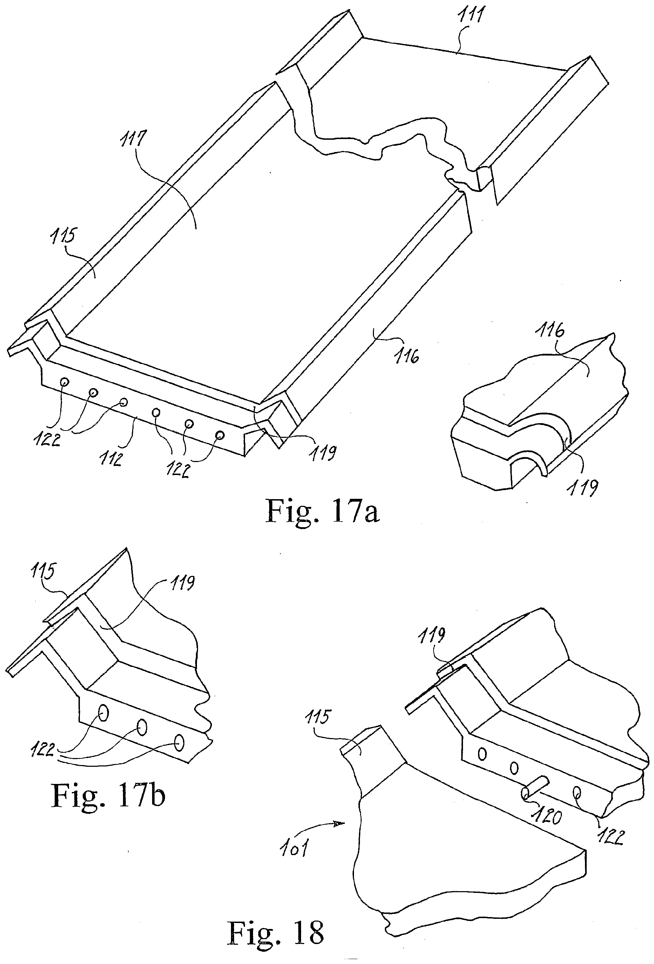

Alternatively, or additionally in any of the above described embodiments, the major surface 117 may be provided with a layer of a thermal insulating material 119; see Figs 17a and 17b, where Fig. 17a shows a building element in a top view, and Fig. 17b shows a building element in a side or end view.

Alternatively, or additionally the building element may be provided on top or below its major surface 117 with a layer of black polyester or dyed black polyester.

The function of the element is determined dependent on the intentional application, position and orientation (upright, slanted, vertical, horizontal, etc.) of the building element.

Furthermore, the use of the channels or holes 122 of the building element, e.g. which fluids are brought to flow, determines the functionality (heat, cold, air condition) of the building element.

However, some or all of the holes or channels 122 may be applied to running of pipes, electrical wires or cables, e.g. communication or computer control cables, antenna wires and the like. Alternatively, the channels or holes may be used to the running of a bowden cable for the control of mechanical movements, e.g. pulling or pushing of a machine part, e.g. a gear-mechanism, a clutch, a brake, etc.

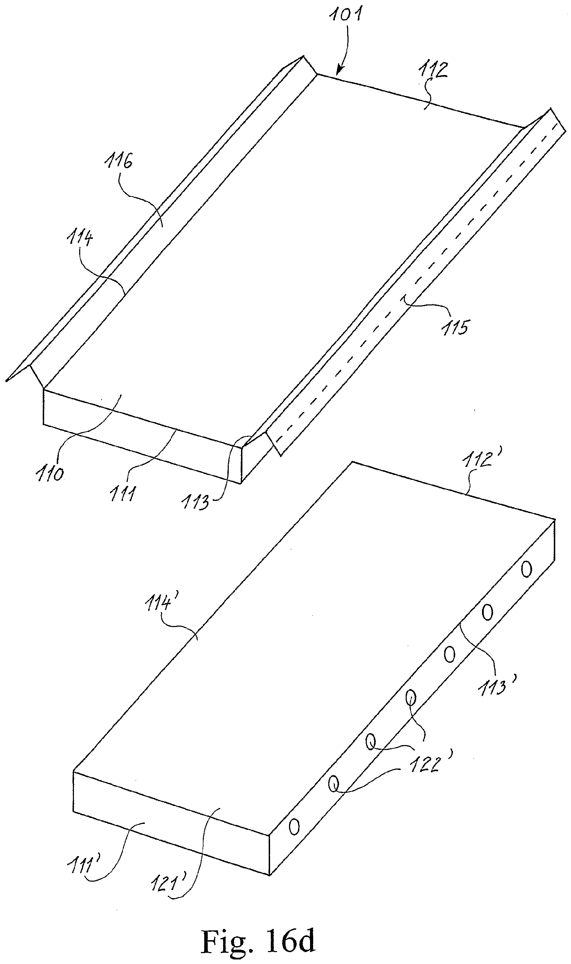

Fig. 16d illustrates in greater details the parts constituting the building element 101. Basically, the building element 101 is constituted by the profiled panel 110, the profiled channel housing 121 and the two connectors 115 and 116. In order to have a flexible manufacturing plant it is important for logistic purposes that the parts 110, 115, 116 and 121 are provided together, e.g. extruded or preferably pultruded together. Alternatively, the parts 110, 115, 116 and 121 may be provided as individual parts or components.

In fig. 16d, the profiled channel housing 121' constitutes a separate housing part defining first and second ends 113', 114' and third and fourth ends 111' and 112' corresponding to the ends 113, 114, 111 and 112 of the profiled panel 110.

The profiled channel housing 121 may be assembled with the profiled panel 110 in two different ways.

Firstly, the ends 111', 112', 113' and 114' of the profiled channel housing 121 are positioned juxtaposed to corresponding respective ends 111, 112, 113 and 114 of the profiled panel 110. Hereby the connector 115 and the other parallel connector 116 are both parallel with the channels or holes 122 of the resulting building element 101.

Secondly, the ends 111', 112', 113' and 114' of the profiled channel housing 121 are positioned juxtaposed to corresponding respective ends 113, 114, 111 and 112 of the profiled panel 110. Hereby the connector 115 and the other parallel connector 116 are both orthogonal with the holes 122 or channels 122 of the resulting building element 101. In this second case where the channels 122 or holes 122 are orthogonal to the two connectors, the profiled channel housing 121 and profiled panel 110 are preferably pultruded or extruded in separate processes.

In another embodiment parts of the building element are provided from one pultruding equipment from one manufacturing site, i.e. the two profiled connectors 115 and 116 may be integrally pultruded with the profiled channel housing 121.

In another embodiment all parts of the building element are provided from one pultruding equipment from one manufacturing site, i.e. the two connectors 115 and 116 are integrally pultruded with the profiled channel housing 121 in conjunction - i.e. in the same process - with the profiled panel 110. Hereby the connectors 115 and 116 and the channels 122 all are parallel with one another in the resulting building element 101 as shown in figure 16a, 16c, 17a, and 17b.

Fig. 18 illustrates how to fixate two building elements together. As illustrated, one or more of the channels 122 may be provided with a respective pipe 120. The pipe 120 is constructed to fit into a respective channel 122 of another building element. The building element 101 may be fixated to a surface, e.g. by means of a screw, a nail, etc., prior to or after the joining of the two building elements 101 together.

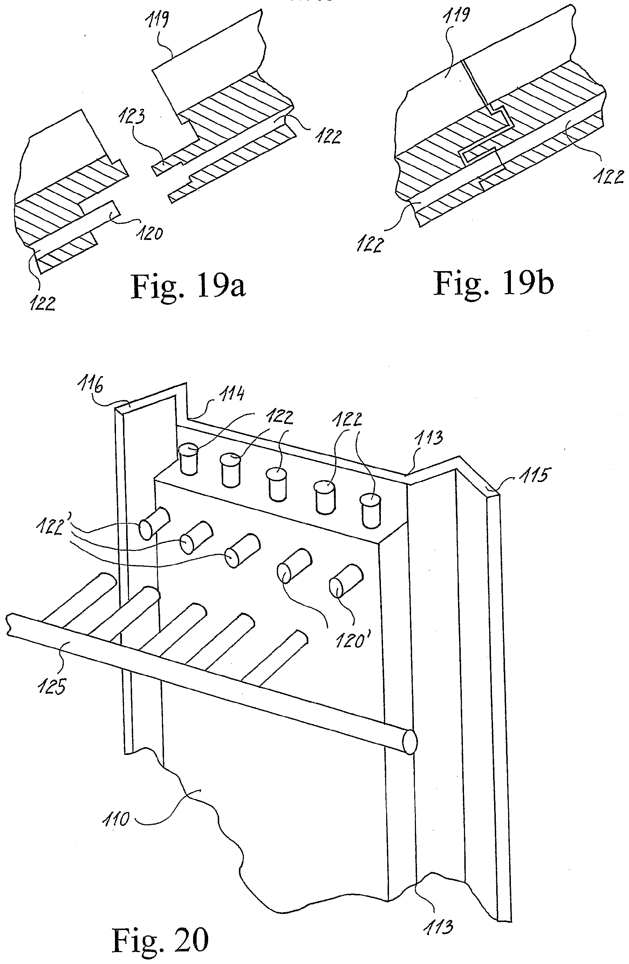

Fig. 19b illustrates two building elements prior to joining and fixating the building elements together, and Fig. 19a illustrates two building elements after joining and fixating. A pipe 120 extending from the channel 122 of the left-hand element is received in the channel 122 of the right-hand building element. A flange 123 of the right-hand building element extends parallel with the longitudinal axis of pipe 120 of the left-hand element and guides the left-hand element into the intentional joining of the two building elements.

The layer of thermal insulating material 119, which may be provided below or on top of the building element, or alternatively integrated in the building element, is in such case preferably selected among flexible materials so as to allow the surfaces orthogonal to the mentioned parallel sides to closely meet and abut one another.

Fig. 20 illustrates a building element applied as a ceiling or roof element. Heating fluid, e.g. warm water or another suitable fluid, e.g. heated gas, is provided to the inner of the building element by means of the insulated pipe 125 to a number of through-going holes 122' orthogonal to through-going holes 122. The through-going holes 122' are in fluid communication with the through-going holes 122. Accordingly the through-going holes 122' are provided with respective inlet connections, and the through-going holes 122 are provided with corresponding outlet connections. Alternatively, the holes 122' may be provided with outlet connections and the holes 122 may be provided with corresponding mating inlet connections.

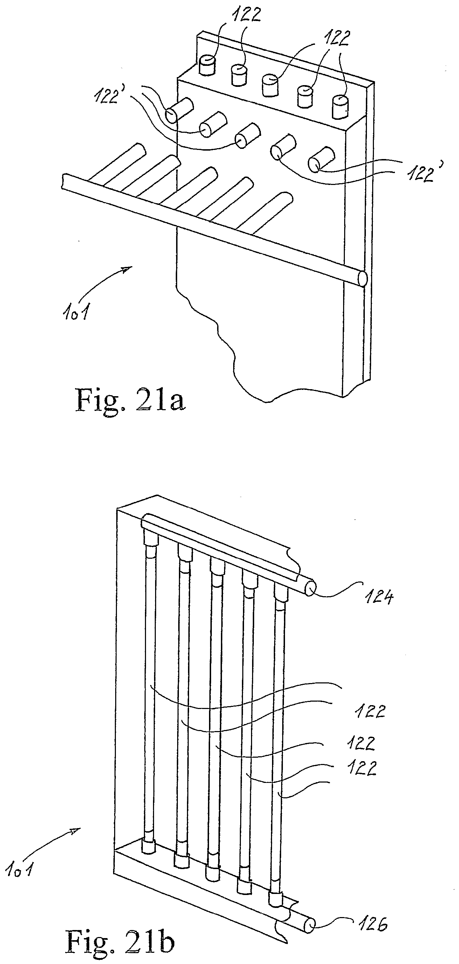

Fig. 21a shows a wall element to be used as a heater by the supply of a fluid such as a warm liquid, e.g. heated water, to the wall element. The element of Fig. 20 is modified in that the pair of connectors 115 and 116 is not provided. Hereby a smooth surface constituted by joined wall elements is provided.

In Fig. 21b comparable inlet and outlet connections are shown constituted by pipes 124 and 126, respectively.

Fig. 21b shows an embodiment of a wall element constituting a heater. The inlet connection is designated the reference numeral 124, and the outlet connection is designated the reference numeral 126. The two connections may be interchanged in the embodiments shown in Figs. 21a and 21b.

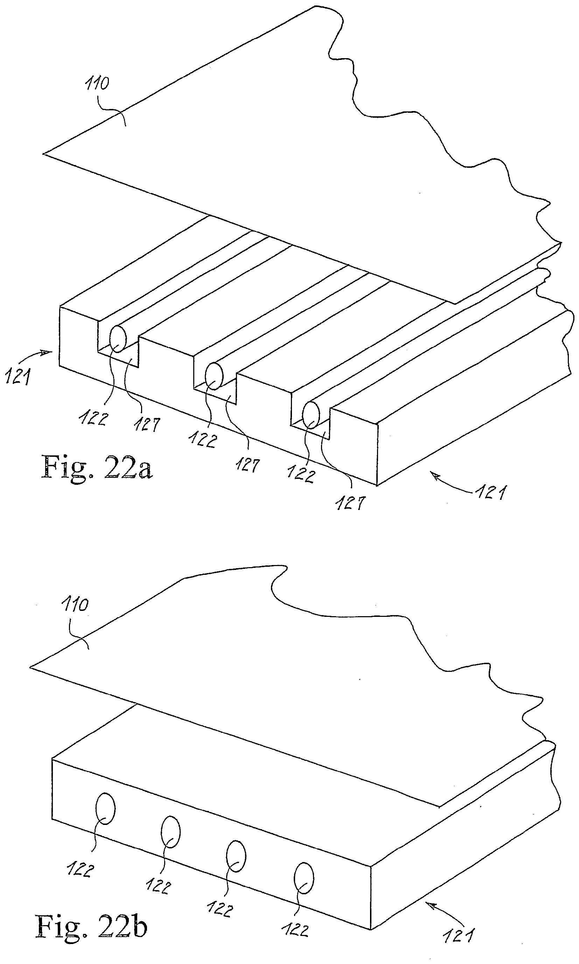

In Figs. 22a and 22b, two alternative embodiments of the building element are shown. In Fig. 22a, the through-going pipes 122 are received with recesses 127 of the profiled channel housing 121, and on top of the profiled channel housing 121, the profiled panel 110 is positioned and sealed to the exposed outer top surfaces of the profiled channel housing 121 providing a structure in which the pipes 122 are freely received within through-going channels defined by the recesses 127. Alternatively, the pipes 122 may be arrested within the grooves or channels defined by the recesses 127 as the pipes 122 may be fixated e.g. by means of an adhesive to the profiled channel housing 121 or alternatively to the profiled panel 110.

In Fig. 22b, an alternative embodiment of the building element is shown in which the pipes 122 are embedded within the profiled channel housing 121 which is joined to the profiled panel 110. As distinct from the embodiment shown in Fig. 122a, the embodiment shown in Fig. 122b may be integrally pultruded as the pipes 122 may be integrally pultruded in the process of providing the profiled channel housing 121 in a single pultrusion process.

Fig. 22 shows the parts constituting the building element. As can be seen in the figure the channels 122 of the profiled channel housing 121 are not through-going tubular holes, however when the profiled panel 110 is joined, i.e. juxtaposed to the profiled channel housing 121 then the channels are closed, e.g. to be tubular for the transportation of any of the fluids mentioned. As a result, the channels 122 now define an identical number of through-going holes in the final building element 101.

Although the present invention has been described above with reference to a set of presently preferred embodiments, it is to be understood that the present invention may be modified in numerous ways without deviating from the scope as defined in the appending claims. Such amendments which will be evident to a person having ordinary skill in the art are to be contemplated part of the present invention.

## Claims

1. A profiled pultruded panel (14,16,18,24,26) to be used as a wall covering, preferably an outer wall covering, of a building or a house, said panel (14,16,18,24,26) comprising:
an elongated, planar plate (72) defining opposite first and second sides and a top and a bottom edge,
a set of profiled top and bottom flanges (74,75) extending perpendicularly from said plate (72) at said first side thereof along said top and bottom edges, respectively, said profiled top flange (74) defining a top surface and said profile bottom flange (75) defining a bottom surface complementary to said top surface of said top flange (74),
at least one further flange (76) extending from said plate (72) at said first side thereof from a position between said top and bottom flanges (74,75) ,
said planar elongated plate (72), said set of profiled top and bottom flanges (74,75) and said at least one further flange (76) being integrally produced in a pultrusion process,
the profiled pultruded panel **characterized in that** the at least one further flange (76) defines an acute angle, preferably an angle of 45°, relative to said plate (72) and sloping downwardly towards said bottom edge.

2. The profiled pultruded panel (14,16,18,24,26) according to claim 1, further comprising one or more additional flanges (76) providing a total of two or more further flanges (76) extending from said plate (72) at said first side thereof from positions equidistantly spaced from said top and bottom flanges (74,75) and each defining an acute angle, preferably an angle of 45°, relative to said plate (72) and extending mutually parallel, and/or,
each of said further flanges (76) having at their outermost ends a downwardly protruding lip (78) and each of said further flanges (76) having at their lower surfaces facing towards said bottom flange (75) an inner recess complementary to said downwardly protruding lip (78), and/or,
further including fixtures at said inner surface for the fixation of electrical cables or wires, heating or water tubes and/or insulating panels, and/or
said inner surface having an alga growth preventing surface coating or a dispenser for dispensing a constituent preventing the growth of micro organisms at said first side.

3. A system comprising a profiled pultruded panel (14,16,18,24,26) according to any of the claims 1-2 and one or more fixation elements (84) for fixating said profiled pultruded panel (14,16,18,24,26) to a wall of a building or a house, said one or more fixation elements (84) each having a face plate and one or more outwardly pultruding and upwardly extending flanges (76) configurated complementary to said one or more further flanges (76).

4. The system according to claim 3, said one or more fixation element (84) being constituted by a segment of said profiled pultruded panel (14,16,18,24,26) being turned upside-down.

5. A wall covering of a building or a house comprising a plurality of profiled pultruded panels (14,16,18,24,26) according to any of the claims 1-2, each fixated by means of a set of fixation devices (84) constituting the fixation devices (84) of the system according to any of the claims 3-4, said plurality of profiled pultruded panels (14,16,18,24,26) being positioned and fixated relative to one another by interconnecting said complementary top and bottom flanges (74,75) of adjacent panels (14,16,18,24,26).

6. A building or a house having an outer wall covering comprising a plurality of profiled pultruded panels (14,16,18,24,26) according to any of the claims 1-2.

7. The building or house according to claim 6, said outer wall covering being implemented according to claim 5.

8. A method of providing an outer weather resistant wall covering of a building or a house comprising the step of fixating sets of fixation devices (84) constituting the fixation devices (84) of the system according to any of the claims 3-4 and positioning a plurality of profiled pultruded panels (14,16,18,24,26) according to any of the claims 1-2 on said set of fixation devices (84) and positioning the bottom flanges (75) of a respective profiled pultruded panel (14,16,18,24,26) complementary catching with and arresting with a profiled top flange (74) of a previously mounted profiled pultruded panel (14,16,18,24,26).

## Patentansprüche

1. Profilierte pultrudierte Platte (14,16,18,24,26) zur Verwendung als eine Wandverkleidung, bevorzugt eine Außenwandverkleidung eines Gebäudes oder eines Hauses, wobei die Platte (14,16,18,24,26) umfasst:
eine längliche, ebene Platte (72), die gegenüberliegende erste und zweite Seiten und einen oberen und einen unteren Rand definiert,
einen Satz von profilierten oberen und unteren Flanschen (74,75), die sich senkrecht von der Platte (72) auf deren erster Seite längs des oberen bzw. des unteren Rands erstrecken, wobei der profilierte obere Flansch (74) eine Oberseite definiert, und der profilierte untere Flansch (75) eine Unterseite komplementär zu der Oberseite des oberen Flansches (74) definiert,
wenigstens einen zusätzlichen Flansch (76), der sich von der Platte (72) auf deren erster Seite von einer Position zwischen den oberen und unteren Flanschen (74,75) erstreckt, und
wobei die ebene längliche Platte (72), der Satz von profilierten oberen und unteren Flanschen (74,75) und der wenigstens eine zusätzliche Flansch (76) in einem Pultrusionsverfahren integral hergestellt sind,
wobei die profilierte pultrudierte Platte **dadurch gekennzeichnet ist, dass** der wenigstens eine zusätzliche Flansch (76) einen spitzen Winkel, bevorzugt einen Winkel von 45°, relativ zu der Platte (72) definiert und nach unten zu dem unteren Rand abfällt.

2. Profilierte pultrudierte Platte (14,16,18,24,26) nach Anspruch 1, ferner umfassend einen oder mehrere zusätzliche Flansche (76) mit insgesamt zwei oder mehreren zusätzlichen Flanschen (76), die sich von der Platte (72) auf deren erster Seite von Positionen äquidistant beabstandet von den oberen und unteren Flanschen (74,75) erstrecken, und jeder einen spitzen Winkel, bevorzugt einen Winkel von 45°, relativ zu der Platte (72) definiert und sich gegenseitig parallel erstreckt, und/oder,
wobei jeder der zusätzlichen Flansche (76) an deren am weitesten außen gelegenen Enden eine nach unten vorstehende Lippe (78) aufweist, und jeder der zusätzlichen Flansche (76) auf deren Unterseiten, die dem unteren Flansch (75) zugewandt sind, eine innere Ausnehmung komplementär zu der nach unten vorstehenden Lippe (78) aufweisen, und/oder,
ferner umfassend Vorrichtungen auf der Innenseite zum Befestigung von elektrischen Kabeln oder Drähten, Heiz- oder Wasserrohren und/oder Dämmplatten, und/oder
wobei die Innenseite eine Algenwachstum verhindernde Oberflächenverkleidung oder einen Spender zum Ausgeben eines Elements aufweist, welches das Wachstum von Mikroorganismen auf der ersten Seite verhindert.

3. System umfassend eine profilierte pultrudierte Platte (14,16,18,24,26) nach einem der Ansprüche 1-2 und ein oder mehrere Befestigungselemente (84) zum Befestigen der profilierten pultrudierten Platte (14,16,18,24,26) an einer Wand eines Gebäudes oder eines Hauses, wobei das eine oder mehrere Befestigungselemente (84) je eine Frontplatte und einen oder mehrere nach außen vorstehende und sich nach oben erstreckende Flansche (76) aufweisen, die komplementär zu dem einen oder mehreren zusätzlichen Flanschen (76) konfiguriert sind.

4. System nach Anspruch 3, wobei das eine oder mehrere Befestigungselemente (84) aus einem Segment der profilierten pultrudierten Platte (14,16,18,24,26) gebildet sind, das umgedreht ist.

5. Wandverkleidung eines Gebäudes oder eines Hauses umfassend eine Vielzahl von profilierten pultrudierten Platten (14,16,18,24,26) nach einem der Ansprüche 1-2, wobei jede mit einem Satz von Befestigungsvorrichtungen (84) befestigt ist, welche die Befestigungsvorrichtungen (84) des Systems nach einem der Ansprüche 3-4 darstellen, wobei die Vielzahl von profilierten pultrudierten Platten (14,16,18,24,26) durch Verbinden der komplementären oberen und unteren Flansche (74,75) von benachbarten Platten (14,16,18,24,26) relativ zueinander positioniert und befestigt sind.

6. Gebäude oder Haus mit einer Außenwandverkleidung umfassend eine Vielzahl von profilierten pultrudierten Platten (14,16,18,24,26) nach einem der Ansprüche 1-2.

7. Gebäude oder Haus nach Anspruch 6, wobei die Außenwandverkleidung nach Anspruch 5 implementiert ist.

8. Methode, um eine außenseitige wetterbeständige Wandverkleidung eines Gebäudes oder eines Hauses zu bekommen, umfassend den Schritt des Befestigens von Sätzen von Befestigungsvorrichtungen (84), welche die Befestigungsvorrichtungen (84) des Systems nach einem der Ansprüche 3-4 darstellen, und Positionieren einer Vielzahl von profilierten pultrudierten Platten (14,16,18,24,26) nach einem der Ansprüche 1-2 auf dem Satz von Befestigungsvorrichtungen (84) und Positionieren der unteren Flansche (75) einer jeweiligen profilierten pultrudierten Platte (14,16,18,24,26) komplementär einrastend mit und arretierend mit einem profilierten oberen Flansch (74) einer früher montierten profilierten pultrudierten Platte (14,16,18,24,26).

## Revendications

1. Panneau profilé pultrudé (14, 16, 18, 24, 26) à être utilisé comme recouvrement mural, de préférence un recouvrement mural extérieur d'un bâtiment ou d'une maison, ledit panneau (14, 16, 18, 24, 26) comprenant:
une plaque plane et allongée (72) définissant des premiér et deuxième côtés opposés ainsi qu'une bordure supérieure et une bordure inférieure,
un ensemble de rebords supérieurs et inférieurs (74, 75) qui s'étendent de manière perpendiculaire à partir de ladite plaque (72) audit premier côté de celle-ci le long desdites bordures supérieures et inférieures, respectivement, ledit rebord supérieur (74) définissant une surface supérieure et ledit rebord inférieur (75) définissant une surface inférieure étant complémentaire à ladite surface supérieure dudit rebord supérieur (74),
au moins un rebord supplémentaire (76) qui s'étend de ladite plaque (72) audit premier côté de celle-ci à partir d'une position entre lesdits rebords supérieurs et inférieurs (74, 75),
et
ladite plaque plane et allongée (72), ledit ensemble de rebords supérieurs et inférieurs (74, 75) et lesdits, au moins un, rebords supplémentaires (76) étant intégralement produits en un procédé de pultrusion,
ledit panneau profilé pultrudé étant **caractérisé en ce qu'**au moins un rebord supplémentaire (76) définit un angle aigu, de préférence un angle de 45°, par rapport à ladite plaque (72) et inclinant vers le bas vers ledit bord inférieur.

2. Panneau profilé pultrudé (14, 16, 18, 24, 26) selon la revendication 1, comprenant en outre au moins un rebord supplémentaire (76) fournissant un total de deux ou davantage de rebords supplémentaires (76) qui s'étendent de ladite plaque (72) audit premier côté de celle-ci à partir de positions espacées de manière équidistante desdits rebords supérieurs et inférieurs (74, 75) et chacun définissant un angle aigu, préférablement un angle de 45°, par rapport à ladite plaque (72) et s'étendant mutuellement en parallel, et/ou,
chacun desdits rebords supplémentaires (76) ayant à leurs extrémités ultrapériphériques un bord en saillie vers le bas (78) et chacun desdits rebords supplémentaires (76) ayant à leurs surfaces inférieures faisant face vers ledit rebord inférieur (75) une rainure intérieure complémentaire audit bord en saillie vers le bas (78), et/ou,
incluant en outre des dispositifs de serrage à ladite surface intérieure pour la fixation de câbles ou de fils électriques, des tuyaux de chauffage ou des tubes d'eau et/ou des panneaux isolants, et/ou
ladite surface intérieure ayant un recouvrement de surface pour la prévention de croissance d'algues ou un distributeur pour la distribution d'un composant qui empêche la croissance des microorganismes audit premier côté.

3. Système comprenant un panneau profilé pultrudé (14, 16, 18, 24, 26) selon l'une quelconque des revendications 1 à 2 et au moins un élément de fixation (84) pour fixer ledit panneau profilé pultrudé (14, 16, 18, 24, 26) sur un mur d'un bâtiment ou une maison, lesdits, au moins un, éléments de fixation (84) ayant chacun une face plate et au moins un rebord (76) s'étendant vers le haut et saillant vers l'extérieur, configuré de manière complémentaire auxdits, au moins un, rebords supplémentaires (76).

4. Système selon la revendication 3, lesdits, au moins un, éléments de fixation (84) étant constitués par un segment dudit panneau profilé pultrudé (14, 16, 18, 24, 26) étant retourné.

5. Mur d'un bâtiment ou d'une maison comprenant une pluralité de panneaux profilés pultrudés (14, 16, 18, 24, 26) selon l'une quelconque des revendications 1 à 2, chacun étant fixé par moyens d'un ensemble de dispositifs de fixation (84) constituant les dispositifs de fixation (84) du système selon l'une quelconque des revendications 3 à 4, ladite pluralité de panneaux profilés pultrudés (14, 16, 18, 24, 26) étant positionnée et fixée l'un par rapport à l'autre en interconnectant lesdits rebords supérieurs et inférieurs (74, 75) de panneaux adjacents (14, 16, 18, 24, 26).

6. Bâtiment ou maison ayant un recouvrement de mur extérieur comprenant une pluaralité de panneaux profilés pultrudés (14, 16, 18, 24, 26) selon l'une quelconque des revendications 1 à 2.

7. Bâtiment ou maison selon la revendication 6, ledit recouvrement de mur extérieur étant mis en oeuvre selon la revendication 5.

8. Méthode pour la fourniture d'un recouvrement de mur résistant aux intempéries d'un bâtiment ou d'une maison, comprenant l'étape de fixer des ensembles de dispositifs de fixation (84) constituant les dispositifs de fixation (84) du système selon l'une quelconque des revendications 3 à 4, et positionnant une pluralité de panneaux profilés pultrudés (14, 16, 18, 24, 26) selon l'une quelconque des revendications 1 à 2 sur ledit ensemble de dispositifs de fixation (84), et positionnant les rebords inférieurs (75) d'un panneau profilé pultrudé (14, 16, 18, 24, 26), captant et saisissant de manière complémentaire avec un rebord supérieure (74) d'un panneau profilé pultrudé (14, 16, 18, 24, 26) monté préalablement.
